# EUROPÄISCHE PATENTSCHRIFT

(11) **EP 2 489 499 B1**
(45) Veröffentlichungstag und Bekanntmachung des Hinweises auf die Patenterteilung: **18.11.2015**
(21) Anmeldenummer: 12155385.3
(22) Anmeldetag: 14.02.2012
(51) Int. Cl.: B29C 70/48, B29C 45/14, B29C 70/08, B29C 37/00, B29C 70/46

(54) **Verfahren zur Herstellung eines Faserverbund-Bauteils**
Method for producing a fibre composite component
Procédé de fabrication d'un composant composite en fibres

(30) Priorität: 16.02.2011 DE 102011004249
(43) Veröffentlichungstag der Anmeldung: 22.08.2012
(73) Patentinhaber: Bayerische Motoren Werke Aktiengesellschaft, 80809 München (DE)
(72) Erfinder: Lischo, Bernd, 82362 Weilheim (DE)

(56) Entgegenhaltungen:
- EP-A1- 0 547 625
- EP-A1- 1 236 564
- EP-A2- 2 113 448
- WO-A1-2011/020841
- DE-A1- 10 320 331
- DE-A1-102008 059 872
- DE-A1-102009 019 236
- DE-A1-102009 019 236
- US-A- 5 190 803

## Beschreibung

Die Erfindung betrifft ein Verfahren zur Herstellung eines Faserverbund-Bauteiles, mit den Merkmalen des unabhängigen Patentansprüchs 1.

Ein Faserverbund-Bauteil ist in der DE 102 40 395 A1 ein Querträger für ein Kraftfahrzeug. Bei einer Ausführung weist der Querträger einen Rohrbogen aus einem Faserverbund-Werkstoff auf, der eine Tragstruktur bildet. Der Rohrbogen kann durch einen Flechtschlauch aus einem Faserverbund-Werkstoff gebildet sein, der beispielsweise durch einen mit Kohlefasern oder Glasfasern oder Aramidgewebe oder gemischten Fasern verstärkten Kunststoff mit einer thermoplastischen Matrix gebildet ist. Ebenso kann der Rohrbogen aus einem Faserflechtschlauch mit eingearbeiteten Thermoplastfäden durch Aufschmelzen, Umformen und Erkalten gebildet sein. Eine weitere Ausführung sieht vor, dass der Rohrbogen in einem Wickelverfahren und anschließendem Laminieren erzeugt ist. Nach einer separaten Fertigung des Rohrbogens können in einem Spritzgießwerkzeug an den Rohrbogen Anschlusselemente für verschiedene Komponenten angespritzt werden, die Profile mit Versteifungsrippen bilden können. Damit der Rohrbogen durch den hohen Druck im Spritzgießwerkzeug nicht verquetscht wird, ist der Rohrbogen entsprechend aufwändig beispielsweise mit einem Innendruck zu belasten oder mit Sand bzw. einem Fluid oder Holzkernen zu füllen. Bei dem Spritzgießvorgang dürfte keine höheren Belastungen Stand haltende Verbindung zwischen dem angespritzen Werkstoff und dem Rohrbogen möglich sein. Dies geht aus Hinweisen in dieser Veröffentlichung hervor, nach denen der angespritzte Werkstoff nicht für eine Hauptkraftaufnahme vorgesehen ist und ein Formschluss zwischen dem angespritzten Werkstoff und dem Rohrbogen beispielsweise durch polygonartige, bei einer Ausführung dreieckförmige Querschnittsausbildungen des angespritzten Werkstoffes und des Rohrbogens im Verbindungsbereich vorgesehen sind. Eine derartige formschlüssige Verbindung ermöglicht lediglich eine drehfeste Verbindung des Rohrbogens und des angespritzten Bauteiles um eine Achse, wobei die Verbindung bei wechselnden Belastungen eventuell gelockert wird. Belastungen in anderen Richtungen dürfte eine derartige formschlüssige Verbindung zumindest nicht dauerhaft Stand halten.

Die Druckschrift EP 1236564 A1 betrifft ferner ein Verfahren zur Herstellung von Bauteilen aus faserverstärktem Kunststoff, bei dem ein mit Fasern belegter Kern in eine Form eingebracht wird und Kunststoff oder Kunststoffvorprodukte in flüssiger Form im Wesentlichen senkrecht zu den Fasern in den Formraum eingeleitet wird.

Ferner beschreibt die Druckschrift DE 102009019236 A1 ein Verfahren zur Herstellung eines Faserverbundbauteils, insbesondere eines Querträgers für ein Kraftfahrzeug, wobei ein mit Fasern umflochtenes Kernelement in einem Spritzgießverfahren umspritzt wird.

Der Erfindung liegt die Aufgabe zu Grunde, ein Verfahren zur Herstellung eines Faserverbund-Bauteils für ein Kraftfahrzeug, das eine Tragstruktur bildet, mit den Merkmalen des unabhängigen Patentanspruches 1 anzugeben, wobei das Bauteil schnell und einfach gefertigt werden kann und eine auch größeren Belastungen Stand haltende Verbindung der Fasern und des thermoplastischen Kunststoffes mit dem zusätzlichen thermoplastischen Kunststoff ermöglicht.

Diese Aufgabe ist durch die im Patentanspruch 1 angegebenen Merkmale gelöst.

Vorteilhafte Ausgestaltungen der Erfindung sind den Unteransprüchen entnehmbar.

Das Faserverbund-Bauteil bildet eine Tragstruktur für ein Kraftfahrzeug. Hierzu weist das Faserverbund-Bauteil Fasern auf, die in einen thermoplastischen Kunststoff eingebettet sind. Die Fasern und der thermoplastische Kunststoff bilden vor dem Einspritzen eines zusätzlichen thermoplastischen Kunststoffes oder eines Monomers, das durch Polymerisation ein zusätzlicher thermoplastischer Kunststoff wird, in und/oder um das erwärmte Faserverbund-Bauteil Hohl- und/oder Freiräume, die bei geschlossenem Spritzgießwerkzeug in einem Spritzgießvorgang mit einem zusätzlichen thermoplastischen Kunststoff oder einem Monomer, das durch Polymerisation ein thermoplastischer Kunststoff wird, gefüllt sind, der zusätzliche Bereiche des Faserverbund-Bauteiles bildet.

Die Hohl- und/oder Freiräume können auf unterschiedliche Weise durch Ausschnitte oder Prägungen oder beispielsweise dadurch gebildet sein, dass die Fasern und der thermoplastische Kunststoff bzw. ein Monomer, das durch Polymerisation ein thermoplastischer Kunststoff wird, derart verbunden sind, dass zwischen den Fasern und/oder dem thermoplastischen Kunststoff bzw. Monomer oder zwischen den Fasern und/oder dem thermoplastischen Kunststoff bzw. Monomer und jeweils Wandbereichen des geschlossenen Spritzgießwerkzeugs Hohl- und/oder Freiräume gebildet sind. Hohl- und/oder Freiräume zwischen den Fasern können dadurch gebildet sein, dass der thermoplastische Kunststoff bzw. das Monomer vorzugsweise flüssig auf die bereits in eine Hälfte des geöffneten Spritzgießwerkzeugs eingelegten Fäden aufgebracht wird und lediglich kurzzeitig so lange gewartet wird, bis der fließfähige oder fließfähig erwärmte thermoplastische Kunststoff bzw. das Monomer teilweise, vorzugsweise größtenteils, jedoch nicht vollständig in Hohl- und/oder Freiräume zwischen den Fasern eingedrungen ist. Danach wird das beispielsweise erwärmte Spritzgießwerkzeug geschlossen und in einem Spritzvorgang in dem Spritzgießwerkzeug mit dem eingespritzten zusätzlichen thermoplastischen Kunststoff verbunden, der durch Druck einerseits die verbliebenen Hohl- und/oder Freiräume zwischen den Fasern und/oder dem thermoplastischen Kunststoff bzw. Monomer und/oder zwischen den Fasern und/oder dem thermoplastischen Kunststoff bzw. Monomer und jeweils Wandbereichen des Spritzgießwerkzeugs füllt und dabei gleichzeitig weitere Bereiche des Faserverbund-Bauteiles bildet. Auf diese Weise wird eine innige Verbindung zwischen den Fasern und dem thermoplastischen Kunststoff und dem zusätzlichen thermoplastischen Kunststoff in sehr kurzer Zeit erreicht, wodurch beispielsweise jeweils innerhalb einer Taktzeit von ca. 2,5 Minuten ein fertiges Faserverbund-Bauteil gebildet werden kann. Besonders vorteilhaft ist, wenn auf die in wenigstens eine Werkzeughälfte des Spritzgießwerkzeugs eingelegten Fasern das durch Erwärmung dünnflüssige Vorprodukt Caprolactam beispielsweise durch Sprühen, Streichen, Rollen oder Tränken aufgebracht wird, das bei dem nachfolgenden Spritzgießvorgang, bei dem der zusätzliche thermoplastische Kunststoff angespritzt wird, durch Polymerisation der thermoplastische Kunststoff Polyamid wird, der sehr günstige Eigenschaften für das Produkt aufweist. Vor dem Schließen des Spritzgießwerkzeugs kann an den im Einsatz besonders belasteten Stellen des Faserverbund-Bauteiles auf die Fasern und/oder den thermoplastischen Kunststoff wenigstens ein Verstärkungs- und/oder Befestigungselement aufgelegt werden, das beispielsweise ein vorgefertigtes Halbzeug aus einem Langfaserthermoplasten (LFT) oder einem Glasmattenthermoplasten (GMT) ist, das eventuell mit wenigstens einem Verstärkungs- und/oder Befestigungselement verstärkt und/oder mit einem Versteifungsteil versteift ist. Beispielsweise das Verstärkungs- und/oder Befestigungselement und/oder das Versteifungsteil können vor dem nachfolgenden Spritzvorgang Hohl- und/oder Freiräume aufweisen, die ebenfalls bei dem Spritzvorgang von dem zusätzlichen thermoplastischen Material gefüllt werden und dadurch eine innige Verbindung mit dem zusätzlichen thermoplastischen Material ermöglichen.

Da Caprolactam hygroskopisch ist und Wasser anzieht, das für den Fertigungsprozess hinderlich und für das Faserverbund-Bauteil nachteilig ist, wirkt sich das Einlegen der Fasern in das offene Spritzgießwerkzeug für den Fertigungsprozess und das Faserverbund-Bauteil günstig aus. Der Fertigungsprozess kann derart schnell durchgeführt werden, dass das Faserverbund-Bauteil kein oder kaum Wasser aufnehmen kann. Anstelle der Fasern und des fließfähigen Caprolactams bzw. eines Monomers, das durch Polymerisation ein thermoplastischer Werkstoff wird, kann auch ein Vorprodukt aus Fasern und einem thermoplastischen Material verwendet werden, das beispielsweise als Matte oder Platte ausgebildet als Organoblech zu beziehen ist. Das Vorprodukt kann beispielsweise teigig erwärmt in eine Werkzeughälfte des offenen Spritzgießwerkzeugs eingelegt und eventuell an besonders belasteten Stellen mit einem Verstärkungs- und/oder Befestigungselement verstärkt und/oder mit einem Versteifungsteil versteift sein oder im offenen Spritzgießwerkzeug durch ein Anordnen eines derartigen Teiles verstärkt bzw. versteift werden. Danach kann das Spritzgießwerkzeug geschlossen und der zusätzliche thermoplastische Kunststoff oder ein Monomer, das durch Polymerisation ein zusätzlicher thermoplastischer Kunststoff wird, eingespritzt werden. Die verwendbaren Materialien und weitere Eigenschaften können den Unteransprüchen entnommen werden. Der zusätzliche thermoplastische Kunststoff bzw. das zusätzliche Monomer, das durch Polymerisation ein zusätzlicher thermoplastischer Kunststoff wird, kann dem thermoplastischen Kunststoff bzw. dem Monomer, das durch Polymerisation ein thermoplastischer Kunststoff wird, entsprechen oder durch einen anderen thermoplastischen Kunststoff bzw. ein anderes Monomer gebildet sein, das durch Polymerisation ein thermoplastischer Kunststoff wird und jeweils Eigenschaften aufweist, die für das angegebene Spritzgießverfahren geeignet sind, bei dem sich im Spritzgießwerkzeug bereits die angegebenen Materialien befinden. Nach Merkmalen der Unteransprüche kann das Faserverbund-Bauteil auch mit einer optisch ansprechenden Oberfläche gefertigt werden.

Das Faserverbund-Bauteil ist nach dem Verfahren gemäß dem unabhängigen Patentanspruch 1 gefertigt, die eine schnelle und einfache Fertigung eines Faserverbund-Bauteiles ermöglicht, das auch höheren Belastungen Stand hält und Unteransprüchen entsprechend eine optisch ansprechende Gestaltung des Faserverbund-Bauteiles ermöglichen.

Das Faserverbund-Bauteil kann ein beliebiges, auch Last tragendes Bauteil an einem Kraftfahrzeug sein, das beispielsweise ein zwischen seitlichen A-Säulen angeordneter Querträger ist. Der Querträger kann beispielsweise an den A-Säulen, in einem seitlich mittleren Bereich an einem Kardantunnel sowie über thermoplastische Streben an einem unteren Windlauf im unteren Bereich einer vorderen Windschutzscheibe befestigt sein und eine Abstützmöglichkeit für ein Armaturenbrett, einen Handschuhkasten und eine Lenksäule bieten. Grundsätzlich kann das Faserverbund-Bauteil ein nahezu beliebiges Teil eines Kraftfahrzeugs an einer nahezu beliebigen Stelle sein, das beispielsweise einen Wandbereich oder eine Wandverkleidung oder einen Deckel bzw. eine Klappe bildet. Durch die Verwendung thermoplastischer Kunststoffe kann das Material des Faserverbund-Bauteiles nach einem Gebrauch beispielsweise durch Zerstückelung und erneutem Einschmelzen und eventuell weiteren Aufbereitungsschritten mehrmals bzw. sehr oft wieder verwendet werden, wodurch Materialien eingespart und die Kosten für die Fertigung eines neuen Faserverbund-Bauteiles erheblich gesenkt werden können.

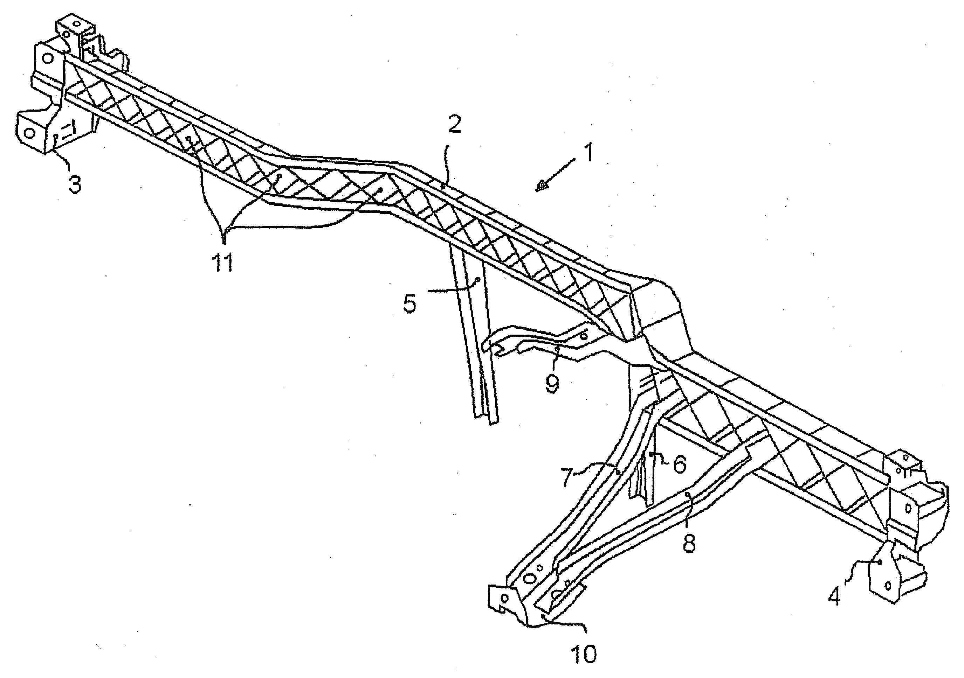

Zwei Ausführungsbeispiele der Erfindung werden anhand einer einzigen Zeichnung näher erläutert, die einen an seitlichen A-Säulen eines Kraftfahrzeugs befestigbaren Querträger darstellt, an dem beispielsweise ein Armaturenbrett und eine Lenksäule abgestützt sind.

Ein erstes Ausführungsbeispiel wird nachfolgend an Hand der einzigen Figur beschrieben, in der ein Faserverbund-Bauteil 1 für ein Kraftfahrzeug dargestellt ist. Das Faserverbund-Bauteil 1 bildet einen lasttragenden Querträger 2, der zwischen seitlichen, nicht dargestellten A-Säulen der Karosserie des Kraftfahrzeugs im Wesentlichen in Fahrzeugquerrichtung verläuft und über seitliche Verstärkungs- und Befestigungselemente 3, 4 an den A-Säulen über nicht dargestellte lösbare und/oder unlösbare Befestigungsmittel befestigt ist. Der von dem Faserverbund-Bauteil 1 gebildete Querträger 2 dient als Tragstruktur. Hierzu weist das Faserverbund-Bauteil 1 Fasern auf, die in einen thermoplastischen Kunststoff eingebettet sind. Die Fasern und der thermoplastische Kunststoff bilden vor dem Einspritzen eines zusätzlichen thermoplastischen Kunststoffes oder eines Monomers, das ein zusätzlicher thermoplastischer Kunststoff wird, in und/oder um das erwärmte Faserverbund-Bauteil in einem Spritzgießwerkzeug Hohl- und/oder Freiräume, die von dem geschlossenen Spritzgießwerkzeug mit einem zusätzlichen thermoplastischen Kunststoff oder einem zusätzlichen Monomer, das durch Polymerisation ein zusätzlicher thermoplastischer Kunststoff wird, gefüllt werden, der nach dem Spritzgießvorgang zusätzliche Bereiche 5, 6, 7, 8, 9 des Faserverbund-Bauteiles 1 bildet.

Bei dem Ausführungsbeispiel bilden die von dem zusätzlichen thermoplastischen Kunststoff gebildeten zusätzlichen Bereiche 5, 6 etwa vertikale, von dem Querträger 2 nach unten abstehende Stützstreben, die jeweils an einem zugeordneten Seitenbereich eines Kardantunnels der Karosserie des Kraftfahrzeugs befestigt sind. Die V-förmig angeordneten zusätzlichen Bereiche 7, 8 sind an ihrer Basis mit einem Versteifungsteil 10 verbunden, wodurch eine steife Struktur gebildet ist, die eine nicht dargestellte Lenksäule stützt. Der zusätzliche, in normaler Fahrtrichtung des Kraftfahrzeugs von dem Querträger 2 nach vorne abstehende Bereich 9 ist mit einem nicht dargestellten unteren Bereich eines Windlaufes unter der vorderen Windschutzscheibe des Kraftfahrzeugs verbunden.

Die in der Figur nicht erkennbaren Fasern des Faserverbund-Bauteiles 1 können zumindest bereichsweise beispielsweise durch Basaltfasern, Borfasern, Glasfasern, Keramikfasern, Kieselsäurefasern, Stahl-Fasern, Aramidfasern, Kohlenstofffasern, Polyester-Fasern, Nylon-Fasern, Polyethylen-Fasern, Plexiglas-Fasern, Holzfasern, Flachs-Fasern, Hanf-Fasern oder Sisalfasern gebildet sein. Die Fasern können zumindest bereichsweise ein Gewebe, Gelege, Multiaxialgelege, Gesticke, Geflecht, Vlies oder eine Matte oder einen Feinschnitt bilden und/oder zumindest bereichsweise durch Kurz- oder Lang- oder Endlosfasern gebildet sein.

Bei einer vorteilhaften Ausgestaltung ist der thermoplastische Kunststoff ein Polyamid, das durch ein Aufbringen von flüssigem Caprolactam auf die in das offene Spritzgießwerkzeug eingelegten Fasern bei einem Spritzgießvorgang durch Polymerisation im erwärmten und geschlossenen Spritzgießwerkzeug gebildet ist, bei dem etwa gleichzeitig der zusätzliche thermoplastische Kunststoff in die von den Fasern und/oder von dem thermoplastischen Kunststoff gebildeten Hohl- und/oder Freiräume eingespritzt wird.

Das bei entsprechender Erwärmung flüssige Vorprodukt Caprolactam kann beispielsweise bei in eine Werkzeughälfte des Spritzgießwerkzeugs eingelegten Fasern durch Sprühen, Streichen, Rollen oder Tränken auf die Fasern aufgebracht werden, wobei danach lediglich so lange der Spritzgießvorgang nicht erfolgt, bis das Caprolactam teilweise, vorzugsweise größtenteils, jedoch nicht vollständig in die Hohl- und/oder Freiräume zwischen den Fasern eingedrungen ist. Bei dem folgenden Spritzgießvorgang wird bei der Prozesstemperatur das Vorprodukt Caprolactam in bekannter Weise in Polyamid polymerisiert und gleichzeitig der zusätzliche thermoplastische Kunststoff an das Faserverbund-Bauteil angespritzt.

Würde in anderer Weise das Caprolactam zuvor in einem eigenen Spritzgießvorgang mit den Fasern verbunden, würden sämtliche Frei- und/oder Hohlräume zwischen den Fasern zugespritzt, so dass bei dem nachfolgenden Spritzvorgang der zusätzliche thermoplastische Kunststoff nicht oder nicht wesentlich in Frei- und/oder Hohlräume zwischen die Fasern eindringen könnte. Die Hohl- und Freiräume müssten dann auf eine andere Weise entsprechend aufwändig gebildet werden. Beispielsweise an wenigstens einer besonders belasteten Stelle des fertigen Faserverbund-Bauteiles 1 kann vor dem Schließen des Spritzgießwerkzeugs auf die Fasern und/oder das Caprolactam und/oder an einer beliebigen Stelle im offenen Spritzgießwerkzeug ein Verstärkungs- oder Befestigungselement und/oder ein Versteifungsteil oder ein Halbzeug aus einem Langfaserthermoplasten (LFT) oder einem Glasmattenthermoplasten (GMT), der durch ein Verstärkungs- und/oder Befestigungselement verstärkt oder durch ein Versteifungsteil versteift sein kann, aufgebracht bzw. angeordnet werden.

Nach dem Schließen des Spritzgießwerkzeugs wird bei dem folgenden Spritzgießvorgang der zusätzliche thermoplastische Kunststoff oder ein Monomer, das ein zusätzlicher thermoplastischer Kunststoff wird, in die Hohl- und/oder Freiräume eingespritzt. Bei dem Ausführungsbeispiel werden dabei Versteifungsrippen 11 an das Faserverbund-Bauteil 1 angespritzt, wodurch das fertige Faserverbund-Bauteil 1 eine entsprechende Steifigkeit aufweist. Außerdem kann dabei der zusätzliche thermoplastische Kunststoff ein verwendetes Verstärkungs- oder Befestigungselement und/oder ein Versteifungsteil und/oder ein Halbzeug und/oder ein Verstärkungs-und/oder Befestigungselement des Halbzeugs zumindest teilweise umspritzen oder in eventuell darin ausgebildete Sack- oder Durchgangsöffnungen eindringen bzw. diese ausfüllen. In der einzigen Figur sind lediglich einige Versteifungsrippen 11 durch zu der Bezugszahl 11 führende Linien markiert.

Das Faserverbund-Bauteil kann an wenigstens einer Oberfläche mit einer glatten, lackierbaren Folie oder mit einer gefärbten und/oder strukturierten Folie verbunden sein, die über wenigstens eine durch einen weiteren thermoplastischen Kunststoff gebildete Zwischenschicht mit dem Faserverbund-Bauteil verbunden ist.

Das Faserverbund-Bauteil 1 ist beispielsweise durch ein besonders vorteilhaftes Verfahren gebildet, bei dem in eine Hälfte eines offenen Spritzgießwerkzeugs Fasern eingelegt werden, auf die flüssiges Caprolactam aufgebracht wird, das teilweise, vorzugsweise größtenteils, jedoch nicht vollständig in die Zwischenräume zwischen den Fasern einsickert. Das erwärmte und geschlossene Spritzgießwerkzeug spritzt dann in die verbliebenen Hohl- und/oder Freiräume jeweils zwischen den Fasern und/oder dem Caprolactam und/oder Wänden des Spritzgießwerkzeugs einen zusätzlichen thermoplastischen Kunststoff oder ein Monomer, das durch Polymerisation ein thermoplastischer Kunststoff wird, ein, der zusätzliche Bereiche des Faserverbund-Bauteiles bildet. Nach dem Polymerisieren des Stoffes Caprolactam zu Polyamid im Spritzgießwerkzeug wird das Spritzgießwerkzeug geöffnet und das Faserverbund-Bauteil 1 dem Spritzgießwerkzeug entnommen. Der gesamte Vorgang kann wiederholt beispielsweise jeweils in ca. 2,5 Minuten durchgeführt werden.

Nach oder vor dem Aufbringen des flüssigen Caprolactams auf die Fasern können bei noch geöffnetem Spritzgießwerkzeug an wenigstens einer besonders belasteten Stelle des fertigen Faserverbund-Bauteiles 1 auf die in einer Hälfte des offenen Spritzgießwerkzeugs befindlichen Fasern und/oder gegebenenfalls auf das auf die Fasern aufgebrachte Caprolactam ein Verstärkungs- oder Befestigungselement oder Versteifungsteil oder ein vorgefertigtes Halbzeug aus einem Langfaserthermoplasten (LFT) oder einem Glasmattenthermoplasten (GMT), das eventuell mit wenigstens einem Verstärkungs- und/oder Befestigungselement verstärkt und/oder mit einem Versteifungsteil versteift ist, aufgebracht bzw. angeordnet werden. Nach dem Schließen des Spritzgießwerkzeugs kann im Spritzgießwerkzeug gegebenenfalls das Verstärkungs- und/oder Befestigungselement und/oder Versteifungsteil und/- oder das Halbzeug und/oder das Verstärkungs- und/oder Befestigungselement des Halbzeugs von dem zusätzlichen Kunststoff zumindest bereichsweise umspritzt und/oder durchdrungen werden, der dabei in eventuelle Hohl- und/oder Freiräume in dem betreffenden Teil oder um das betreffende Teil herum eindringt.

Eine optisch ansprechende Oberfläche des Faserverbund-Bauteiles 1 kann dadurch gebildet werden, dass das mit dem zusätzlichen thermoplastischen Kunststoff gefertigte Faserverbund-Bauteil 1 in mindesten eine Hälfte eines anderen Spritzgießwerkzeugs eingelegt wird, und wenigstens eine glatte, lackierbare Folie oder eine gefärbte und/oder strukturierte Folie in die andere Hälfte des anderen Spritzgießwerkzeugs eingelegt und dann das Spritzgießwerkzeug geschlossen wird, worauf in den Zwischenraum zwischen der Folie und dem Faserverbund-Bauteil 1 ein weiterer thermoplastischer Kunststoff oder ein Monomer, das durch Polymerisation ein weiterer thermoplastischer Kunststoff wird, eingespritzt wird, der eine Zwischenschicht bildet, die das Faserverbund-Bauteil 1 mit der Folie verbindet. Ist die Folie lackierbar, kann diese nach einer Entnahme aus dem Spritzgießwerkzeug eventuell vorbehandelt und lackiert werden.

Es ist auch möglich, ein Faserverbund-Bauteil oder mehrere Faserverbund-Bauteile und mehrere Folien in einer Hälfte oder in beiden Hälften eines anderen Spritzgießwerkzeugs so anzuordnen, dass bei geschlossenem Spritzgießwerkzeug jeweils zwischen einem Oberflächenbereich eines Faserverbund-Bauteiles und einer zugeordneten Folie ein Zwischenraum gebildet ist, in dem ein weiterer eingespritzter thermoplastischer Kunststoff oder ein eingespritztes Monomer, das durch Polymerisation ein weiterer thermoplastischer Kunststoff wird, eine Zwischenschicht bildet, die den betreffenden Oberflächenbereich des Faserverbund-Bauteiles mit der zugeordneten Folie verbindet.

Ein zweites Ausführungsbeispiel der Erfindung wird ebenfalls an Hand der einzigen Figur beschrieben, das weitgehend mit dem ersten Ausführungsbeispiel überein stimmende, gleich bezifferte Bauteile aufweist.

Bei dem zweiten Ausführungsbeispiel, das wie in der einzigen Figur dargestellt ein Faserverbund-Bauteil 1 für ein Kraftfahrzeug ist, bildet das Faserverbund-Bauteil 1 ebenfalls einen lasttragenden Querträger 2, der zwischen seitlichen, nicht dargestellten A-Säulen der Karosserie des Kraftfahrzeugs im Wesentlichen in Fahrzeugquerrichtung verläuft und über seitliche Verstärkungs- und Befestigungselemente 3, 4 an den A-Säulen über nicht dargestellte lösbare und/oder unlösbare Befestigungsmittel befestigt ist. Der von dem Faserverbund-Bauteil 1 gebildete Querträger 2 dient als Tragstruktur. Hierzu weist das Faserverbund-Bauteil 1 Fasern auf, die in einen thermoplastischen Kunststoff eingebettet sind.

Gegenüber dem ersten Ausführungsbeispiel unterschiedlich ist bei dem zweiten Ausführungsbeispiel vorgesehen, dass die Fasern und der thermoplastische Kunststoff als plattenförmiges oder profilförmiges Vorprodukt gefertigt sind, das beispielsweise als plattenförmiges Organoblech zu beziehen ist. Die Hohl- und/oder Freiräume können auf unterschiedliche Weise durch Ausschnitte oder Prägungen oder beispielsweise dadurch gebildet sein, dass die Fasern und der thermoplastische Kunststoff derart verbunden sind, dass zwischen den Fasern und/oder dem thermoplastischen Kunststoff oder zwischen den Fasern und/oder dem thermoplastischen Kunststoff und jeweils Wandbereichen des geschlossenen Spritzgießwerkzeugs Hohl- und/oder Freiräume gebildet sind.

Das plattenförmige oder profilförmige Vorprodukt wird teigig erwärmt in eine Hälfte des nicht dargestellten offenen Spritzgießwerkzeugs eingelegt. Eventuell an im Gebrauch des Faserverbund-Bauteiles besonders belasteten Stellen kann auf das Vorprodukt wenigstens ein Verstärkungs- und/oder Befestigungselement oder ein Versteifungsteil oder ein vorgefertigtes Halbzeug aus einem Langfaserthermoplasten (LFT) oder einem Glasmattenthermoplasten (GMT), das eventuell mit wenigstens einem Verstärkungs- und/oder Befestigungselement verstärkt und/oder mit einem Versteifungsteil versteift ist, aufgebracht bzw. an einer geeigneten Stelle in wenigstens einer Hälfte des Spritzgießwerkzeugs angeordnet werden.

Nach dem Schließen des Spritzgießwerkzeugs kann in dem erwärmten Spritzgießwerkzeug durch eine entsprechende Druckbelastung in die verbliebenen bzw. gebildeten Hohl- und/oder Freiräume ein zusätzlicher thermoplastischer Kunststoff oder ein Monomer, das ein zusätzlicher thermoplastischer Kunststoff wird, eingespritzt werden, der dabei mit den Fasern und/oder dem thermoplastischen Kunststoff innig und belastbar verbunden wird.

Dabei bildet der zusätzliche thermoplastische Kunststoff zusätzliche Bereiche 5, 6, 7, 8, 9 des Faserverbund-Bauteiles 1. Auch bei dem zweiten Ausführungsbeispiel bilden die von dem zusätzlichen thermoplastischen Kunststoff gebildeten zusätzlichen Bereiche 5, 6 etwa vertikale, von dem Querträger 2 nach unten abstehende Stützstreben, die jeweils an einem zugeordneten Seitenbereich eines Kardantunnels der Karosserie des Kraftfahrzeugs befestigt sind. Die V-förmig angeordneten zusätzlichen Bereiche 7, 8 sind an ihrer Basis mit einem Versteifungsteil 10 verbunden, wodurch eine steife Struktur gebildet ist, die eine nicht dargestellte Lenksäule stützt. Der zusätzliche, in normaler Fahrtrichtung des Kraftfahrzeugs von dem Querträger 2 nach vorne abstehende Bereich 9 ist mit einem nicht dargestellten unteren Bereich eines Windlaufes unter der vorderen Windschutzscheibe des Kraftfahrzeugs verbunden.

Auch bei dem zweiten Ausführungsbeispiel können die in der Figur nicht erkennbaren Fasern des Faserverbund-Bauteiles 1 zumindest bereichsweise beispielsweise durch Basaltfasern, Borfasern, Glasfasern, Keramikfasern, Kieselsäurefasern, Stahl-Fasern, Aramidfasern, Kohlenstofffasern, Polyester-Fasern, Nylon-Fasern, Polyethylen-Fasern, Plexiglas-Fasern, Holzfasern, Flachs-Fasern, Hanf-Fasern oder Sisalfasern gebildet sein. Die Fasern können zumindest bereichsweise ein Gewebe, Gelege, Multiaxialgelege, Gesticke, Geflecht, Vlies oder eine Matte oder einen Feinschnitt bilden und/oder zumindest bereichsweise durch Kurz- oder Lang- oder Endlosfasern gebildet sein.

Das zweite Ausführungsbeispiel sieht ebenfalls vor, dass bei dem Spritzgießvorgang im Spritzgießwerkzeug an das Faserverbund-Bauteil 1 im Wesentlichen durch den zusätzlichen thermoplastischen Kunststoff gebildete Versteifungsrippen 11 angeformt werden, von denen in der Figur lediglich einige Versteifungsrippen 11 durch zu der Bezugszahl 11 führende Linien markiert sind.

Nach der Fertigung des Faserverbund-Bauteiles oder nach einem ergänzenden Bearbeitungsverfahren kann wenigstens eine Oberfläche des Faserverbund-Bauteiles mit einer glatten, lackierbaren Folie oder mit einer gefärbten und/oder strukturierten Folie verbunden werden, die über wenigstens eine durch einen weiteren thermoplastischen Kunststoff gebildete Zwischenschicht mit einem mit dem ursprünglich gefertigten oder mittels wenigstens einem ergänzenden Bearbeitungsverfahren nachbearbeiteten Faserverbund-Bauteil verbunden wird.

Ein bevorzugtes Verfahren sieht hierzu vor, dass eine optisch ansprechende Oberfläche des Faserverbund-Bauteiles 1 dadurch gebildet wird, dass das zuvor in einem Spritzgießwerkzeug mit dem zusätzlichen thermoplastischen Kunststoff gefertigte und eventuell nachbearbeitete Faserverbund-Bauteil 1 in eine Hälfte eines anderen Spritzgießwerkzeugs eingelegt wird, und wenigstens eine glatte, lackierbare Folie oder eine gefärbte und/oder strukturierte Folie in die andere Hälfte des anderen Spritzgießwerkzeugs eingelegt und dann das Spritzgießwerkzeug geschlossen wird, worauf in den Zwischenraum zwischen der Folie und dem Faserverbund-Bauteil 1 ein thermoplastischer Kunststoff oder ein Monomer, das ein thermoplastischer Kunststoff wird, eingespritzt wird. Bei Verwendung einer lackierbaren Folie kann nach einer Entnahme des mit der Folie über die Zwischenschicht aus einem thermoplastischen Kunststoff verbundenen Faserverbund-Bauteiles 1 die eventuell noch an ihrer Außenfläche behandelte Folie lackiert werden.

Die Erfindung kann selbstverständlich von den beiden Ausführungsbeispielen abweichend ausgeführt werden. Die Form und Größe des Faserverbund-Bauteiles kann weitgehend frei vorgegeben werden. Das Material und die Anordnung jeweils der Fasern können von den angegebenen Materialien und Anordnungen mehr oder weniger abweichen. Die Zahl und Form der Hohl- und Freiräume, die vor dem Einspritzen des zusätzlichen thermoplastischen Kunststoffes bzw. des Monomers gebildet sind, kann weitgehend frei vorgegeben werden oder mehr oder weniger zufällig gebildet sein.

Zur Herstellung des Faserverbund-Bauteiles können die beiden beschriebenen, besonders vorteilhaften Verfahren verwendet werden. Ebenso kann auch ein anderes geeignetes Verfahren angewendet werden.

## Patentansprüche

1. Verfahren zur Herstellung eines Faserverbund-Bauteiles, wobei in mindestens eine Hälfte eines offenen Spritzgießwerkzeugs Fasern eingelegt werden, auf die flüssig ein Monomer, das durch Polymerisation ein thermoplastischer Kunststoff wird, aufgebracht wird, das teilweise, vorzugsweise größtenteils, jedoch nicht vollständig in die Zwischenräume zwischen den Fasern einsickert, dann das erwärmte und geschlossene Spritzgießwerkzeug in die verbliebenen Hohl- und/oder Freiräume zwischen den Fasern und/oder dem Monomer und/oder Wänden des Spritzgießwerkzeugs einen zusätzlichen thermoplastischen Kunststoff (5, 6, 7, 8, 9, 11) oder ein zusätzliches Monomer, das durch Polymerisation ein thermoplastischer Kunststoff wird, einspritzt, der zusätzliche Bereiche des Faserverbund-Bauteiles (1) bildet, und nach dem polymerisieren des Monomers zu einem thermoplastischen Kunststoff das Spritzgießwerkzeug geöffnet und das Faserverbund-Bauteil (1) dem Spritzgießwerkzeug entnommen wird.

2. Verfahren nach Anspruch 1, wobei das Monomer durch flüssiges Caprolactam gebildet ist, das beim Spritzgießen durch Polymerisation im erwärmten und geschlossenen Spritzgießwerkzeug ein Polyamid wird.

3. Verfahren nach einem der Ansprüche 1 oder 2, wobei vor dem Schließen des Spritzgießwerkzeugs an wenigstens einer besonders belasteten Stelle des fertigen Faserverbund-Bauteiles (1) auf die Fasern und/oder das Monomer oder gegebenenfalls das Vorprodukt oder an einer anderen Stelle im offenen Spritzgießwerkzeug ein Verstärkungs- und/oder Befestigungselement oder ein Versteifungsteil (10) oder ein Halbzeug aus einem Langfaserthermoplasten (LFT) oder einem Glasmattenthermoplasten (GMT), das mit einem Versteifungsteil verstärkt bzw. versteift sein kann, aufgebracht oder angeordnet wird, oder zusätzlich nach dem Schließen des Spritzgießwerkzeugs bei dem Spritzgießvorgang, bei dem der zusätzliche thermoplastische Kunststoff (7, 8) eingespritzt wird, der zusätzliche thermoplastische Kunststoff (7, 8) das Verstärkungs- und/oder Befestigungselement und/oder Versteifungsteil (10) und/oder Vorprodukt und/oder Halbzeug zumindest bereichsweise umspritzt.

4. Verfahren nach einem der Ansprüche 1 bis 3, wobei beim Einspritzen des zusätzlichen thermoplastischen Kunststoffes (5, 6, 7, 8, 9, 11) in die Hohl- und/oder Freiräume der zusätzliche thermoplastische Kunststoff Versteifungsrippen (11) bildet.

5. Verfahren nach einem der Ansprüche 1 bis 4, wobei die Fasern zumindest bereichsweise durch Basaltfasern, Borfasern, Glasfasern, Keramikfasern, Kieselsäurefasern, Stahl-Fasern, Aramidfasern, Kohlenstofffasern, Polyester-Fasern, Nylon-Fasern, Polyethylen-Fasern, Plexiglas-Fasern, Holzfasern, Flachs-Fasern, Hanf-Fasern oder Sisalfasern gebildet sind, oder zusätzlich zumindest bereichsweise ein Gewebe, Gelege, Multiaxialgelege, Gesticke, Geflecht, Vlies oder eine Matte oder einen Feinschnitt bilden und/oder zumindest bereichsweise durch Kurz- oder Lang- oder Endlosfasern gebildet sind.

6. Verfahren nach einem der Ansprüche 1 bis 5, wobei mindestens ein mit einem zusätzlichen thermoplastischen Kunststoff (5, 6, 7, 8, 9, 11) gefertigtes Faserverbund-Bauteil (1) in mindestens eine Hälfte eines Spritzgießwerkzeugs eingelegt wird, und mindestens eine glatte, lackierbare Folie oder eine gefärbte und/oder strukturierte Folie in mindestens die andere Hälfte des Spritzgießwerkzeugs so eingelegt wird, dass bei geschlossenem Spritzgießwerkzeug zwischen der Folie und einem Wandbereich des Faserverbund-Bauteiles ein Zwischenraum gebildet ist, in den das Spritzgießwerkzeug einen die Folie mit dem Faserverbund-Bauteil verbindenden weiteren thermoplastischen Kunststoff oder ein Monomer, das ein thermoplastischer Kunststoff wird, einspritzt, oder zusätzlich nach einer Entnahme des über die Zwischenschicht aus einem thermoplastischen Kunststoff mit einer lackierbaren Folie verbundenen Faserverbund-Bauteiles (1) die eventuell noch an ihrer Außenfläche behandelte Folie lackiert wird.

7. Verfahren nach einem der Ansprüche 1 bis 6, wobei das Faserverbundbauteil eine Tragstruktur für ein Kraftfahrzeug bildet.

## Claims

1. A method of producing a composite fibre compound, wherein fibres are inserted into at least one half of an open mould, and a liquid monomer converted into thermoplastics material by polymerisation is deposited thereon and seeps partly, preferably mostly, but not completely into the spaces between the fibres, after which the mould, heated and closed, injects an additional thermoplastics material (5, 6, 7, 8, 9, 11) into the remaining cavities and/or spaces between the fibres and/or the monomer and/or the walls of the mould, or injects an additional monomer converted into a thermoplastics material by polymerisation and forming additional regions of the composite fibre component (1), and after the monomer has been polymerised to form a thermoplastics material, the mould is opened and the composite fibre component (1) is removed from the mould.

2. A method according to claim 1, wherein the monomer is of liquid caprolactam which, when injected, is converted to polyamide by polymerisation in the heated, closed mould.

3. A method according to claim 1 or claim 2, wherein before the mould is closed, a reinforcing and/or fastening element or a stiffening part (10) or a fabricated material made from a long-fibre thermoplastics material (LFT) or a glass-mat thermoplastics material (GMT) which can be reinforced or stiffened by a stiffening part is applied or deposited, or additionally after the mould has been closed during the injection process, in which the additional thermoplastics material (7, 8) is injected, the additional thermoplastics material (7, 8) coats the reinforcing and/or fastening element and/or the stiffening part (10) and/or the fabricated material and/or the semi-finished product, at least at places thereof.

4. A method according to any of claims 1 to 3, wherein the additional thermoplastics material forms reinforcing ribs (11) during injection of the additional thermoplastics material (5, 6, 7, 8, 9, 11) into the cavities and/or spaces.

5. A method according to any of claime 1 to 4, wherein the fibres, at least at places, are in the form of basalt fibres, boron fibres, glass fibres, ceramic fibres, silica fibres, steel fibres, aramid fibres, carbon fibres, polyester fibres, nylon fibres, polyethylene fibres, plexi glass fibres, wood fibres, flax fibres, hemp fibres or sisal fibres or additionally, at least at places, are formed by a weft, a laid fabric, a multiaxial laid fabric, embroidery, braid, fleece, or mat or a precision blank and/or are in the form, at least in places, of short or long or endless fibres.

6. A method according to any of claims 1 to 5, wherein at least one composite fibre component (1) made with an additional thermoplastics material (5, 6, 7, 8, 9, 11) is placed in at least one half of a mould, and at least one smooth, paintable film or a coloured and/or structured film is so placed in at least the other half of the mould that when the mould is closed, a space is formed between the film and a wall region of the composite fibre component, into which space the mould injects an additional thermoplastics material connecting the film to the composite fibre component, or injects a monomer in the form of a thermoplastics material, or additionally, after removal of the composite fibre component (1) bonded to the paintable film by the intermediate layer of thermoplastics material, any surface-treated fibre is painted.

7. A method according to any of claims 1 to 6, wherein the composite fibre component forms a bearing structure for a motor vehicle.

## Revendications

1. Procédé de fabrication d'un composant composite de fibres selon lequel dans au moins une moitié d'un moule d'injection ouvert, on place des fibres sur lesquelles on applique un monomère à l'état liquide qui, par polymérisation, devient une matière thermoplastique, ce monomère s'infiltrant partiellement et de préférence en grande partie mais non totalement dans les intervalles entre les fibres puis, dans le moule d'injection chauffé et fermé, on injecte dans les espaces creux et libres, résiduels, entre les fibres et/ou le monomère et/ou les parois du moule d'injection, une matière thermoplastique supplémentaire (5, 6, 7, 8, 9, 11) ou un monomère supplémentaire qui, par polymérisation, devient une matière thermoplastique, et qui forme des zones supplémentaires du composant composite de fibres (1) et après polymérisation du monomère en une matière thermoplastique, on ouvre le moule d'injection et on extrait le composant composite de fibres (1) du moule d'injection.

2. Procédé selon la revendication 1,
**caractérisé en ce que**
le monomère est constitué par du caprolactame liquide qui, injecté, devient un polyamide par polymérisation dans le moule d'injection chauffé et fermé.

3. Procédé selon l'une des revendications 1 ou 2, dans lequel avant de fermer le moule d'injection à au moins un endroit particulièrement sollicité du composant composite de fibres (1), terminé, on applique ou on dispose sur les fibres et/ou le monomère ou le cas échéant le produit de départ ou à un autre endroit du moule d'injection ouvert, un élément de renforcement et/ou de fixation ou une pièce de renfort (10) ou un produit semi-fini en une matière thermoplastique à fibres longues (LFT) ou un thermoplastique à natte de fibres de verre (GMT) qui est renforcé ou rigidifié par une pièce de renfort, ou en plus après la fermeture du moule d'injection au cours de l'opération d'injection par laquelle on injecte une matière thermoplastique supplémentaire (7, 8), on enrobe au moins partiellement par injection avec la matière thermoplastique supplémentaire (7, 8), l'élément de renfort et/ou de fixation et/ou la pièce de renfort (10) et/ou l'avant-produit ou/et le produit semi-fini.

4. Procédé selon l'une des revendications 1 à 3 selon lequel par l'injection de la matière thermoplastique supplémentaire (5, 6, 7, 8, 9, 11) dans les cavités et/ou espaces libres, la matière thermoplastique supplémentaire forme des nervures de rigidification (11).

5. Procédé selon l'une des revendications 1 à 4 selon lequel les fibres, au moins par zones, sont constituées par des fibres de basalte, bore, verre, céramique, acide silicique, acier, aramides, carbone, polyester, nylon, polyéthylène, plexiglas, bois, chanvre, lin ou sisal ou en plus au moins par zones, on forme un tissu, une nappe, une nappe multiaxiale, un tricot, un tressage, un non-tissé ou une natte ou encore un produit coupé finement et/ou formé par zones, avec des fibres courtes ou longues ou des fibres continues.

6. Procédé selon l'une des revendications 1 à 5 selon lequel on place dans au moins une moitié d'un moule d'injection au moins un composant composite de fibres (1) fabriqué avec une matière thermoplastique supplémentaire (5, 6, 7, 8, 9, 11) et dans au moins l'autre moitié du moule d'injection on place au moins un film lisse susceptible d'être vernis et/ou est teinté et/ou un film structuré de façon que lorsque le moule d'injection est fermé, entre le film et une zone de paroi du composant composite de fibres, il se forme un espace intermédiaire dans lequel on injecte une autre matière synthétique thermoplastique reliant le film au composant composite de fibres ou encore un monomère qui devient une matière thermoplastique ou en plus, après enlèvement du composant composite de fibres relié par la couche intermédiaire qui se compose d'une matière thermoplastique avec un film susceptible d'être vernis, on vernit la surface extérieure du film qui éventuellement reste à être traitée.

7. Procédé selon l'une des revendications 1 à 6 dans lequel le composant composite de fibres constitue une structure de support pour un véhicule automobile.
